# EUROPEAN PATENT APPLICATION

(11) **EP 4 685 716 A1**
(43) Date of publication of application: **28.01.2026**
(21) Application number: 24190083.6
(22) Date of filing: 22.07.2024
(51) Int. Cl.: G06Q 10/063, G06Q 50/43

(54) **METHOD AND SYSTEM FOR RIDE-SHARING DETECTION**

(71) Applicant: HITACHI, LTD., Chiyoda-ku Tokyo 100-8280 (JP)
(72) Inventor: YONEHARA, Miki, London, EC2Y 5AJ (GB); WISETJINDAWAT, Wisinee, London, EC2Y 5AJ (GB); MAIER, Emma, London, EC2Y 5AJ (GB); ADACHI, Shingo, London, EC2Y 5AJ (GB)
(74) Representative: Mewburn Ellis LLP

(57) **Abstract**

A computer-implemented method of detecting ride-sharing by two or more passengers travelling in a shared vehicle is provided. The method comprises: receiving data indicating that a first device associated with a first of the passengers and a second device associated with a second of the passengers are in physical proximity to each other, receiving first motion data from the first device, receiving second motion data from the second device, and comparing the first motion data and the second motion data to verify if the first and second devices are travelling in a same vehicle.

## Description

### Field of the Invention

The present invention relates to a computer-implemented method of detecting two or more passengers travelling in a shared vehicle and to a ride-sharing detection system.

### Background

Detection of passengers ride-sharing in a shared vehicle may be used, for example, to inform statistical surveys, to manage ride-sharing road lanes, or to operate travel discount schemes for incentivizing ecofriendly travel. However, existing technologies for ride-sharing detection can be inaccurate and inconvenient to use.

For example, some existing methods involve using location-based tracking of user devices such as smartphones. However, such location-based technology suffers from inaccuracies in the determination of the devices' locations and in timing recording. For example, when the user devices are in highly congested locations, errors in their estimated location can be significant causing false detections of user devices which are in nearby vehicles. Additionally, some existing systems use proximity detection by detecting communication signals, e.g. Bluetooth, in-order to detect nearby user devices which are in the same vehicle. However, these communication signals can also be detected across adjacent vehicles causing false detections of devices in nearby vehicles instead. Furthermore, such ride-sharing detection systems typically require the collection of location or proximity data by user devices for an entire journey which can consume system resources such as device battery, device storage, mobile network bandwidth, server storage, and server computation resources.

Accordingly, there is a desire for a more accurate ride-sharing detection method which is less resource intensive. The present invention has been devised in light of the above considerations.

### Summary of the Invention

Broadly, the present invention is directed to a method of verifying whether two user devices are travelling in the same vehicle by analysing motion data from each device. By comparing the way each device is moving, a determination of whether the devices are located in the same vehicle can be made, based on how similar the motion of each device is both in form and in time.

Accordingly, in a first aspect of the present invention, there is provided a computer-implemented method of detecting ride-sharing by two or more passengers travelling in a shared vehicle. The method comprises: receiving first motion data from a first device associated with a first of the passengers, receiving second motion data from a second device associated with a second of the passengers, and comparing the first motion data and the second motion data to determine if the first and second devices are travelling in a same vehicle.

Advantageously, by comparing the way that the devices are moving, an accurate determination of whether the devices are in a same vehicle can be made. The local experience of each device, as influenced by the vehicle type and the travel route, is monitored. In this way, a more accurate determination of whether the devices are in the same vehicle can be made, compared to existing systems which may only monitor a distance between the devices and so may confuse two devices which are in close proximity but are in different vehicles.

The computer-implemented method may comprise receiving data indicating that the first device and the second device are in physical proximity to each other. In this way, candidate ride-sharing devices can be identified before comparing the first and second motion data to verify if those candidate devices are located in the same vehicle. For example, the computer-implemented method may comprise: receiving data indicative of a relative distance between the first device and the second device, and then determining from the received data that the first and second devices are in a physical proximity to each other.

The first and/or second device may be a user device such as a smartphone or a computer. In some examples, the first and/or second device may be a computing system of the shared vehicle.

The shared vehicle may be any suitable vehicle for transporting a plurality of passengers such as a car, a bus, a motorbike, or a train.

The data indicative of the physical proximity between the first and second devices may comprise estimated locations of the first and second devices. A relative distance between the devices may therefore be determined by calculating a distance between the estimated locations. In some examples, the data indicative of the physical proximity may comprise proximity data indicating that the first device has detected the second device by receiving a communications signal from the second device. The relative distance between the devices in this example may therefore be indicated by a detection range of the first device. Accordingly, the received data indicating that the first and second devices are in physical proximity to each other may also be referred to herein as location data and/or proximity data. The first motion data, the second motion data, and the received data indicating that the first and second devices are in physical proximity to each other may be referred to, collectively, as sensor data.

In further examples, the method may comprise receiving, from the first device, an indication that the first device has reached a predetermined physical location, and receiving from the second device, an indication that the second device is in or close to the same predetermined physical location. The devices can therefore be determined to be in proximity to each other. The predetermined physical location may correspond to a node of a feature map (described in detail below).

Determining from the received data that the first and second devices are in a physical proximity to each other may comprise: determining if the first and second devices are within a predetermined distance threshold of each other. For example, when the received data includes estimated locations of the first and second devices, the method may include determining that the relative distance between the first and second devices is less than the predetermined distance threshold. The predetermined distance threshold may be a constant value such as 10m, or 5m. In other examples, the predetermined distance threshold may be based on a size of the shared vehicle. For example, for a car, the predetermined distance threshold may be 5m. In further examples, when the received data includes a proximity indication, the physical proximity may be a detection range of the first and/or second devices.

In some examples, the computer-implemented method may comprise using the received data to determine if the first and second devices are travelling together. This may comprise determining if the first and second devices are within the physical proximity for a predetermined period of time and/or for a plurality of locations. In some examples, determining if the first and second devices are travelling together may comprise determining if the estimated locations have changed over time with the relative distance between the first and second devices remaining the same or within the predetermined distance threshold (i.e., the devices have moved but have remained within the physical proximity of each other).

The first and second motion data may comprise time-series measurements of motion which is indicative of accelerations of the respective devices induced by movement of the vehicle. For example, the first and second motion data may include acceleration measurements recorded by a motion sensor, such as an IMU (Inertial Measurement Unit) or an accelerometer, located within, or connected to, each of the first and second devices. Accordingly, the motion data may be referred to herein as acceleration data, IMU data, force data, or vibration data.

The computer-implemented method of the first aspect may be performed by a remote server in communication with the first and/or second device. The first and/or second device may operate an application which is configured to communicate with the remote server, and activate or deactivate the device sensors, such as the motion sensor, a Bluetooth module, or a GPS receiver, based on communications from the remote server.

Alternatively, the computer-implemented method of the first aspect may be performed by the first and/or second device. For example, the first and/or second device may operate an application which is configured to detect whether the respective device is travelling in the same vehicle as another device using the method of the first aspect.

The received data indicating that the first and second devices are in physical proximity to each other may include first location data and/or first proximity data from the first device, and second location data and/or second proximity data from the second device. The data from the second device may be received, optionally, via the first device. For example, the computer-implemented method may include receiving the data indicating that the first and second devices are in physical proximity to each other, the first motion data, and the second data from the first device. Alternatively, the data from the second device may be received (directly) from the second device. In some examples, the first and second location data may include an indication that the first and second devices have reached a predetermined physical location corresponding to the node of a feature map (described in detail below).

Therefore, when the computer-implemented method is performed by a remote server, the remote server may be in communication with (in some examples only) the first device. The second device may be in communication with the first device, for example, using Bluetooth. In other examples, the first and second devices may be configured to communicate individually with the remote server. Alternatively, when the computer-implemented method is performed by the first device, the second motion data and/or the second location data, may be received at the first device from the second device (e.g., over Bluetooth). In this example, receiving the first motion data and/or the first location data may comprise receiving the data from a local memory of the first device.

As mentioned above, the received data indicating that the first and second devices are in physical proximity to each other may comprise an indication that the first device has detected a signal from the second device. The signal may be a Bluetooth signal. Alternatively or additionally, the received data indicating that the first and second devices are in physical proximity to each other may comprise an estimated location of the first device and an estimated location of the second device. The first and second estimated locations may be GPS locations received from GPS receivers of the first and second devices.

Comparing the first motion data and the second motion data may comprise identifying motion features in each of the first and second motion data, and comparing the motion features to determine if the devices are sharing a same travel route and/or a same vehicle type and/or a same vehicle. For example, comparing the first motion data and the second motion data may comprise identifying vibration patterns in the first and second motion data, and comparing the vibration patterns to determine if the devices are sharing a same travel route and/or a same vehicle type. Further, the vibration patterns may be compared to determine if the first and second devices are travelling in the same vehicle.

For example, comparing the first motion data and the second motion data may comprise: identifying a vibration pattern in the first motion data, and identifying the same vibration pattern in the second motion data. Identifying a vibration pattern may comprise extracting a portion of the first motion data. A corresponding portion of the second motion data may then be extracted for the same time period. Each portion of motion data may then be compared to calculate a similarity score between the portions of motion data. If the similarity score is above a predetermined threshold, then the portions may be considered to include the same vibration pattern. Alternatively, if the similarity score is below the predetermined threshold, then the vibration patterns in each portion may be determined to be different. If the same vibration pattern cannot be found in the second motion data, then the method may comprise determining that the devices are travelling in different vehicles (i.e., the owners of those devices are not ride-sharing).

In some examples, identifying a vibration pattern may include extracting vibration features by performing peak detections or by analysing the motion data to find a known vibration pattern. The method may then comprise comparing the identified vibration pattern from the first motion data to the second motion data, for example using a CNN (Convolutional Neural Network), to classify or identify a portion of the second motion data which includes the same vibration pattern. When the same vibration pattern is identified in the second motion data, it may be inferred that the first and second devices are in vehicles with the same movement characteristics (e.g., owing to the vehicle suspension, the vehicle size, or the vehicle make and model) and are travelling on a same travel route (e.g., so that the first and second motion data exhibits the same characteristics indicative of the travel route such as bumps or traffic lights).

Next, the computer-implemented method may comprise calculating a time difference between the vibration patterns identified in the first and second motion data. When the time difference is less than a time difference threshold, it may be determined that the first and second devices are travelling in the same vehicle. Alternatively, if the same vibration pattern is identified in the second motion data, but after the time difference threshold has elapsed, then it may be determined that the first and second devices are in different vehicles, albeit journeying on a same travel route in similar vehicle types. The time difference threshold may be a predetermined threshold. In some examples, the time difference threshold may be determined according to travel mode (e.g., a vehicle type of the shared vehicle).

In some examples, the computer-implemented method may comprise using motion data from the first and second devices to determine a vehicle type in which the first and second devices are travelling. The time difference threshold may then be dependent on the determined vehicle type. The motion data for determining the vehicle type may be any motion data from the first and second devices (recorded in the same journey) including, in some examples, the first and second motion data used to verify ridesharing. If the first and second devices are determined to be travelling in different vehicle types, then the method may comprise determining that the first and second devices are not travelling in the same vehicle (e.g., and generating a negative ride-sharing indication signal).

In some examples, the computer-implemented method may comprise activating the first and second devices to record the first and second motion data for a predetermined period of time. In this way, battery and other resource consumption may be reduced since the motion data does not need to be recorded for an entire journey. This concept may also be applied to the detection, recording, and transmitting of the location and/or proximity data. For example, the computer-implemented method may comprise activating the first and/or second devices to record the proximity and/or location data for a predetermined period of time.

Accordingly, the computer-implemented method may comprise generating timing information and providing the timing information to the first and second devices, the timing information being configured to enable sensors in the first and second devices to begin measuring and recording the first and second motion data for a predetermined period of time. Generating the timing information may comprise: determining a physical location of the first and/or second devices (e.g., from the received data), and comparing the physical location to locations in a feature map to determine if the physical location corresponds to one of a plurality of vibration feature points identified in the feature map.

The feature map may be a database of vibration feature points associated with respective locations. Each of the plurality of vibration feature points may indicate a location associated with a previously detected vibration pattern. For example, the vibration feature points may include locations with bumps in roads or traffic lights, etc where notable vibration patters have been observed. If the physical location corresponds to one of the plurality of vibration feature points, (e.g., when the first and/or second device is determined to have reached a vibration feature point) the computer-implemented method may comprise generating timing information (or a trigger signal) and providing the timing information (or trigger signal) to the first and/or second devices. Therefore, the device sensors can be activated at times when they are more likely to record motion data which is useful for verifying if the devices are in the same vehicle and deactivated when less useful motion data is expected. Accordingly, a likelihood of the first and second motion data including identifiable vibration patterns is increased without requiring that the motion data is recorded for an entire journey.

The timing information may include a time delay for when the motion sensors should be activated. Thus, the generation of the timing information may include receiving a current physical location of the first and/or second device, identifying a node of the vibration feature map corresponding to the current physical location, and determining one or more expected future nodes of the vibration feature map for the first and/or second device. The one or more expected future nodes may correspond to likely future locations of the first and/or second devices predicted based on the current physical location. Thus, if the one or more expected future nodes includes a vibration feature point, then the computer-implemented method may comprise generating timing information, the timing information being configured to cause the activation of the motion sensors at a time that the first and/or second device is predicted to reach one of the likely future locations.

In some examples, the feature map may be a database containing copies of known vibration profiles associated with respective locations. The computer-implemented method may then comprise comparing the motion data to one or more of the known vibration profiles to verify the physical location of the first and/or second devices.

The computer-implemented method may further comprise detecting a significant vibration pattern in the first and/or second motion data, and updating the vibration feature map based on the detected vibration pattern. For example, a significant vibration pattern may be a portion of the motion data wherein one or more peaks in the data exceeds a predetermined threshold, or wherein new frequency components appear in the motion data. That portion of motion data and the location of the device at the time that the significant vibration pattern was detected may then be recorded and stored as a new node in the vibration feature map.

The computer-implemented method may be for determining if a plurality of passengers are ride-sharing in a shared vehicle. The plurality of passengers may include three or more passengers. For example, the computer-implemented method may comprise receiving data indicating that one or more additional devices are in physical proximity to the first and/or second device. For example, location data indicating respective locations of one or more additional devices may be received and/or a proximity data indicating that one or more additional devices have been detected by the first device may be received. The computer-implemented method may further comprise receiving additional motion data from the one or more additional devices, and comparing the additional motion data to the first and/or second motion data to determine if the one or more additional devices are travelling in the same vehicle as the first and/or second devices. The additional motion data may be compared to the first and/or second motion data using any of the techniques discussed herein for comparing the first and second motion data.

When the first and second devices are determined to be in the same vehicle, the computer-implemented method may comprise generating a ride-sharing indication signal. The ride-sharing indication signal may be provided to, for example, the first and/or second devices, an access control system, a car park management system, a ride-sharing lane management system, a discount managing system, etc. For example, the access control system may be configured to grant access to a carpark by a vehicle if passengers of that vehicle are determined to be ride-sharing. In further examples, a ride-sharing lane management system may be configured to, for example, activate a CCTV camera or turn on automatic signage depending on if passengers of a vehicle in a ride-sharing lane are determined to be ride sharing.

In a second aspect of the present invention, there is provided a computer-implemented method of verifying ride-sharing by two or more passengers in a shared vehicle, the method comprising: recording, by a first device associated with one of the passengers, data indicating that the first device and a second device associated with a second of the passengers are in physical proximity to each other, recording, by the first device, motion of the first device using a sensor to generate first motion data, and providing the indicating that the first and second devices are in physical proximity to each other and the motion data to a ride-sharing detection system, the ride-sharing detection system being configured to determine if the first and second devices are travelling together in a same vehicle according to the method of the first aspect.

For example, the computer-implemented method of the second aspect may be performed by a first device operating an application for verifying that the user of the device is sharing a vehicle with someone else. The ride-sharing detection system may be a module running on the first device or a remote server configured to perform the computer-implemented method of the first aspect. Accordingly, the computer-implemented method of the second aspect may also include any of the steps of the first aspect, which may be performed by a remote server and/or the first device.

Accordingly, in a third aspect of the present invention there is provided a computer-implemented method of detecting ride-sharing by two or more passengers travelling in a shared vehicle, the method comprising: collecting, by a first device associated with one of the passengers, data indicating that the first device and a second device associated with a second of the passengers are in physical proximity to each other; measuring, by the first device, motion of the first device using an IMU sensor to generate first motion data; and transmitting, by the first device, the data indicating that the first and second devices are in physical proximity to each other and the motion data to a ride-sharing detection server. The computer-implemented method further comprises: receiving, by the ride-sharing detection server: the first motion data from the first device, the data indicating that the first device and the second device are in physical proximity to each other, and second motion data from the second device (optionally transmitted via the first device); and comparing, by the ride-sharing detection server, the first motion data and the second motion data to verify if the first and second devices are travelling in a same vehicle.

In a fourth aspect of the present invention there is provided a ride-sharing detection system configured to perform the computer-implemented method of the first aspect. For example, the ride-sharing detection system for detecting ride-sharing by two or more passengers travelling in a shared vehicle may comprise: a data collection module configured to receive data indicating that a first device associated with a first of the passengers and a second device associated with a second of the passengers are in physical proximity to each other, first motion data from the first device, and second motion data from the second device; a proximity detection module configured to determine, from the received data if the first and second devices are travelling together; and a ride sharing verification module configured to compare the first motion data and the second motion data to determine if the first and second devices are travelling together in a same vehicle.

The system may further comprise the first device, wherein the first device is configured to: record the first motion data using a sensor to sense motion of the first device, optionally receive the second motion data from the second device, and provide the first motion data to the data collection module. The data collection module, the proximity detection module, and ride sharing verification module may be located on a remote ride-sharing detection server in communication with the first and/or second devices.

Additional aspects of the invention may relate to systems configured to execute the computer-implemented method of any one of the first, second, and third aspects of the invention. Specifically, the system may comprise one or more processors which are configured to execute the respective computer-implemented methods of the first, second, and third aspects of the invention.

Additional aspects of the invention may provide a computer program comprising instructions which, when the program is executed by a computer, cause the computer to carry out the steps of a computer-implemented method of any one of the first, second, and third aspects of the present invention. Further aspects of the invention may provide a computer-readable storage medium, having stored thereon, the computer program of the previous aspects of the invention.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** shows a flow diagram of a computer-implemented method for determining if passengers are travelling in a shared vehicle according to aspects of the present invention;
**Fig. 2** shows a system for performing the ride-sharing detection method according to aspects of the present invention;
**Fig. 3** shows another diagram of a system for performing the ride-sharing detection method according to aspects of the present invention;
**Fig. 4A-4B** show an example of vibration data from vehicles driving over a bump;
**Fig. 5** shows an example vibration feature map;
**Fig. 6** shows a flow-diagram of a method for determining if passengers are travelling in a shared vehicle;
**Fig. 7** shows a flow-diagram of a method of using a vibration feature map to determine timing information;
**Fig. 8** shows a flow-diagram of a method for generating a vibration feature map;
**Fig. 9** is a table showing an example of input data received from user device by a ride-sharing detection server;
**Fig. 10** is a table showing an example of timing control data for activating a device's sensors;
**Fig. 11** is a table showing example timing threshold data for determining if two devices are in a same vehicle; and
**Fig. 12** is a table showing example output data from the ride-sharing detection server.

### Detailed Description of the Invention

Aspects and embodiments of the present invention will now be discussed with reference to the accompanying figures. Further aspects and embodiments will be apparent to those skilled in the art.

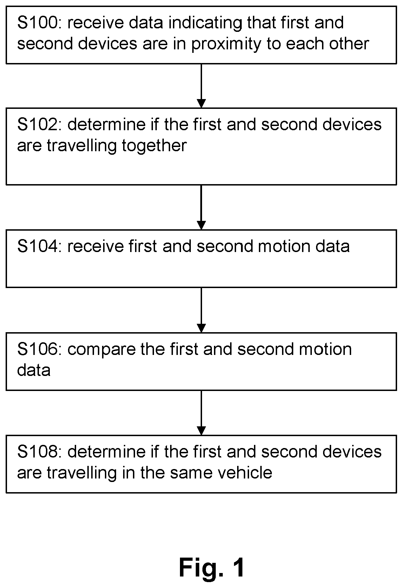

Fig. 1 shows a method for determining if passengers are travelling in a shared vehicle. For example, the method may be performed by a remote server in communication with user devices belonging to the passengers such as smartphones. The user devices are configured to communicate with the remote server over the internet. At least one of the devices may be operating an application which is configured to transmit sensor data to the remote server and receive commands from the server to activate or deactivate the sensors. However, in some examples, some or all of the method may be performed, locally, on one of the user devices.

In step S100 the remote server receives data indicating that first and second user devices are in proximity to each other. For example, the server may receive a first GPS location from the first device and a second GPS location from the second device, a relative distance between the devices therefore being indicated by the distance between the first and second GPS locations. Additionally, one of the devices may detect a PAN (personal area network) signal from the other device, such as a Bluetooth advertising signal, indicating that another device is nearby. In this example, proximity data indicating which signals have been detected is transmitted to the remote server. In other examples, the received data may indicate that the first and second user devices have both been detected at or near to a predetermined location (e.g., corresponding to the node of a feature map, described below).

In step S102 the remote server determines if the first and second devices are travelling together by determining if the first and second GPS locations of the user devices are moving together and/or if the devices are staying within a detection range of each other. If the first and second devices are determined to be travelling together or are at least within a physical proximity of each other, then the server moves to step S104 to verify that the first and second devices are travelling in a shared vehicle.

In step S104, the remote server receives first motion data from the first user device and second motion data from the second user device. The motion data is timeseries data indicative of motion experienced by the devices owing, at least in part, to the movement of the vehicle in which they are travelling, for example, as measured by an integrated IMU sensor of each device. By comparing the motion data, the server is able to determine if the devices are in a same vehicle or just in nearby vehicles.

Thus, in step S106, the remote server compares the first and second motion data. As discussed in detail below, this step includes identifying vibration patterns in the first and second motion data by calculating a similarity score between the first and second motion data. If the similarity score is above a threshold similarity, then the method includes determining a time difference between the vibrations experienced by the first and second devices.

In step S108, the remote server determines if the first and second devices are travelling in the same vehicle by determining if the same vibration pattern has been experienced by both devices and if the time difference between the vibrations experienced by each device is lower than a threshold. If the devices are determined to be in the same vehicle, then the server may transmit a confirmation signal e.g., to the first and/or second device, to an access control gate, or to a ride sharing discount scheme.

In each of the above steps, each of the user devices may communicate with the remote server to provide location data, proximity data, and motion data. However, in some examples, the remote server may communicate with only one of the user devices. The location and motion data from the other user devices may then be received, by the first user device (e.g., over Bluetooth) which then forwards the data to the remote server. In this way, only one device needs be in communication with the remote server to determine if passengers are ride-sharing.

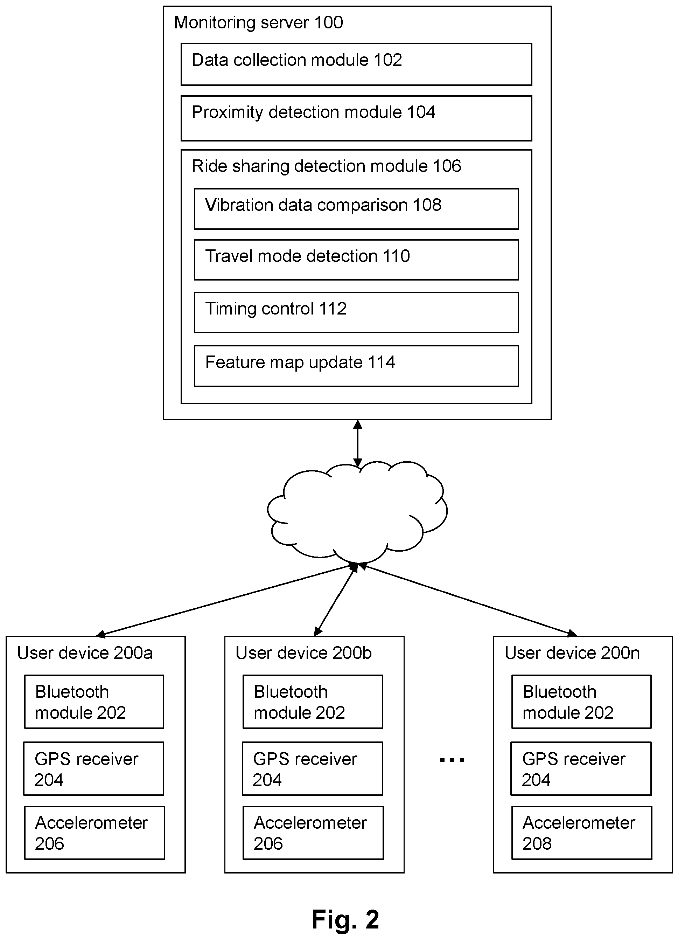

Fig. 2 shows an example system for performing the ride-sharing detection method described above.

The system comprises a monitoring server 100 (which may also be referred to herein as a ride-sharing detection server) which is configured to send commands to, and receive sensor data from, user devices 200a-200n over the internet in order to determine if the user devices are travelling in a shared vehicle, such as a car or bus. In this example, three user devices 200a-200n are shown. However, any number of user devices 200a-200n may connect to the monitoring server 100 to determine if they are travelling in shared vehicles.

Each user device 200a-200n is equipped with multiple sensors including a Bluetooth module 202, a GPS receiver 204, and an accelerometer 206. These sensors are used to collect time-series sensor data during a journey. The sensor data is transmitted to the monitoring server 100 over the internet.

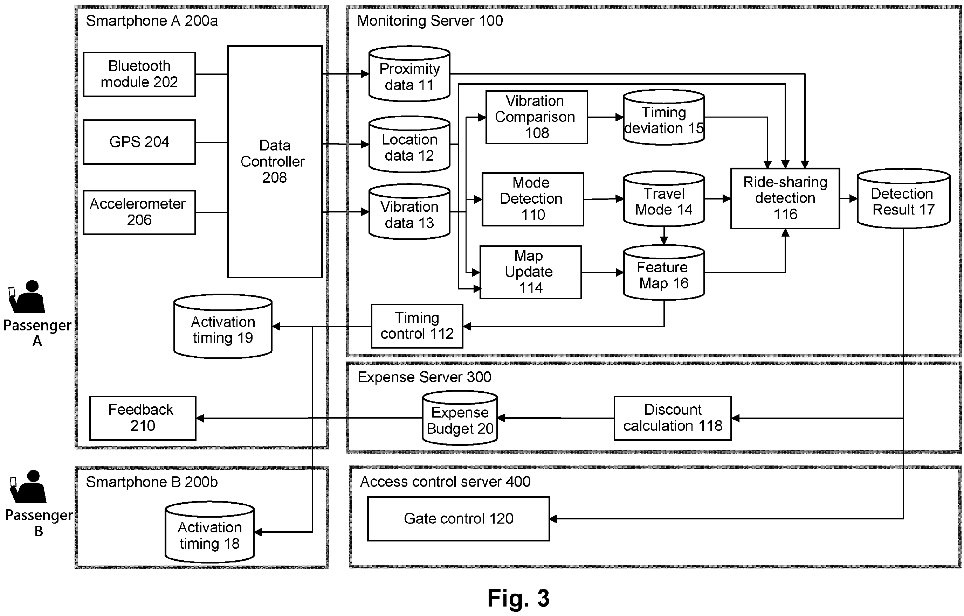

The monitoring server 100 comprises a data collection module 102 configured to receive the sensor data from the user devices 200a-200n; a proximity detection module 104 configured to determine from the received data which of the user devices 200a-200n are travelling together by analysing Bluetooth signals received by each device and/or by comparing the GPS locations of each device; and a ride-sharing detection module 106 configured to determine if the user devices 200a-200n are travelling in a same vehicle by comparing the vibration data from the accelerometers 106 (e.g., using a vibration data comparison function 108). The ride-sharing detection module 106 also comprises a travel mode detection function 110 for determining a vehicle type in which the devices 200a-200n are travelling in, a timing control function 112 for generating timing data to selectively activate and deactivate the device sensors depending on a vibration feature map, and a feature map update function 114 for updating said vibration feature map. These functions are described in more detail below in relation to Figs. 3-9.

Fig. 3 shows a diagram of the system for performing the ride-sharing detection method in more detail. In this example, two passengers (passenger A and passenger B) each have a user device, a first device 200a - "smartphone A", and a second device 200b - "smartphone B". As discussed above for Fig. 2, each device 200a-b includes a Bluetooth module 202 for collecting proximity data 11, the proximity data 11 indicating nearby devices which have been detected by each device 200a-b, a GPS receiver 204 for generating location data 12 including estimated locations of the devices 200a-b, and an accelerometer 206 for measuring motion data, which is referred to as vibration data 13 in Fig. 3. The proximity data 11, the location data 12, and the vibration data 13 are transmitted by a data controller 208 over the internet to the data collection module 102 of the monitoring server 100.

The monitoring server 100 is configured to use the proximity data 11 and the location data 12 to determine which user devices are within a physical proximity of each other. User devices 200a-b which are determined to be near each other are grouped as candidate devices which may be travelling in a shared vehicle. Alternatively, if the proximity data or the GPS location data 12 indicates that the devices 200a-b are too far apart to be travelling together, for example if a relative distance between the devices 200a-b is determined to be larger than a predetermined threshold or if the Bluetooth proximity detections are sporadic, then the devices 200a-b are determined to be in different vehicles and a negative detection result 17 is generated by the ride-sharing detection function 116.

Next, the monitoring server 100 is configured to compare the vibration data 13 from each device 200a-200b in the candidate group to verify if they are travelling in a same vehicle (e.g., see vibration comparison 108). To do this, the vibration data 13 from each device 200a-b is analysed to identify a vibration pattern in the data 13. If a particular vibration pattern is identified in the vibration data 13 from both devices 200a-b, then a time difference (referred to as "time deviation" 15 in Fig. 3) between the vibration patterns is calculated. If the calculated time difference 15 is lower than a time difference threshold, then the devices 200a-b are determined to be travelling in the same vehicle and a positive detection result 17 is generated by the ride-sharing detection function 116. However, if the time difference 15 is too large (i.e., larger than the time difference threshold), or no common vibration pattern is identified, then the devices 200a-b are determined to be travelling in different vehicles and a negative detection result 17 is generated.

To assist the ride-sharing detection, the monitoring server 100 is configured to perform a travel mode detection function 110 to determine a travel mode 14 in which the first and second devices are travelling based on the vibration data 13. For example, the travel mode 14 may be walking, car, bike, bus, or train. The determined travel mode 14 is then used to adjust the time difference threshold for comparing the vibration data 13. For example, the determined travel mode 14 may be used to retrieve the time difference threshold (e.g., from memory), the time difference threshold being dependent on the vehicle type indicated by the travel mode 14. The time difference threshold is determined based on a size or length of a vehicle indicated by the travel mode so that large vehicles, such as buses and trains, are assigned longer time difference thresholds and smaller vehicles, such as cars and motorcycles, are assigned shorter time difference thresholds. If the determined travel mode 14 for each device 200a-b in the candidate group is different, then the devices 200a-b may be determined to be in different vehicles and a negative detection result 17 is generated by the ride-sharing detection function 116. Additionally, if the determined travel mode 14 of one or more of the user devices is walking (or any other travel mode which is not a target ride-sharing travel mode) then the monitoring server is configured to generate a negative detection result 17 since it would not be possible in this scenario for the devices to be ride-sharing.

The travel mode 14 is determined using a pretrained machine learning model such as a CNN (convolutional neural network) to classify the travel mode 14 based on vibration data 13 from each device 200a-c. However, in other examples, the travel mode 14 may be a variable which was set during a set-up procedure of the system, or the travel mode may be received from the first and/or second devices 200a-b. For example, a user of an application operating on one the devices 200a-b may input which travel mode 14 they are using.

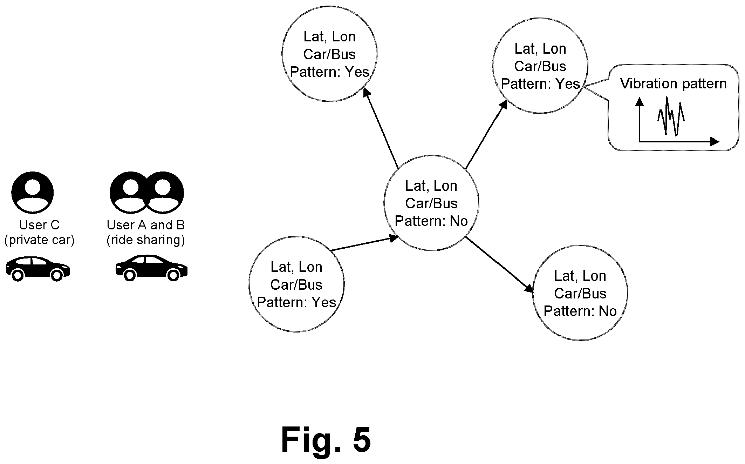

Additionally, the monitoring sever 100 is configured to broadcast timing information 19 to the user devices which is configured to cause the activation and deactivation of the sensors in the user devices at times specified in the timing information 19. In this way, the sensors are not required to record data for the entire journey thereby optimising resource consumption such as battery life. The timing information 19 is determined by comparing the current locations of the user devices to the nodes of a vibration feature map 16. Each node of the vibration feature map 16 is a vibration feature point associated with a physical location. When the location data 12 indicates that a given user device is approaching a vibration feature point of the feature map 16, then activation timing data 19 is calculated and transmitted to the respective user device which causes the accelerometer 206 to activate for a predetermined period of time. Each vibration feature point corresponds to a known location in which identifiable vibration features have been observed. The generation of the activation timing data 19, and the vibration feature map 16 is discussed in more detail below in relation to Figs. 5 to 7.

Referring still to Fig. 3, the location data 12 and vibration data 13 is also used to update the vibration feature map 16 (see map update function 114) to include newly detected vibration feature points detected by the user devices 200a-b. By updating the vibration feature map 16 in this way, the vibration feature map 16 is able to become more detailed over time and adapt to changing route conditions and vehicle types.

The ride-sharing detection result 17 may be utilized for various applications. For example, in Fig. 3, the detection result 17 is provided to an expense server 1003 where a discount calculation 118 is performed to generate a discounted expense budget 20 depending on if a user was determined to be ride-sharing or not. The discounted budget 20 is provided to the user devices 200a-b as feedback 210 to the users. For example, this application may be used when an employer is aiming to encourage employees to use ride-sharing to promote CO₂ reduction in their commute or to reduce congestion of carparks.

Additionally, the detection result 17 in Fig. 3 is provided to an access control server 1004 wherein an access control gate 120 is opened depending on the detection result 17. For example, the access control gate may be configured to grant access to a car park or lane which is specifically provided for ride-sharing users in order to promote ecofriendly travel.

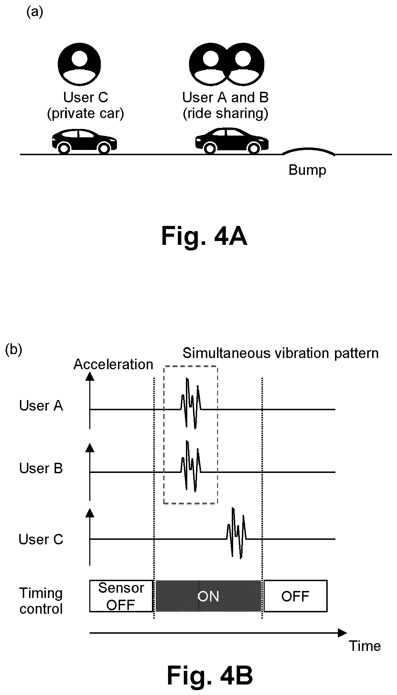

Fig. 4A shows an example situation in which two passengers, user A and B, are ride-sharing in a shared vehicle, and a third passenger, user C, is in a single-passenger vehicle. Both vehicles are adjacent to each other and so it is difficult to detect using only GPS location or Bluetooth detection whether all three users are using individual vehicles, or if some of them are sharing a vehicle. Accordingly, by analysing motion data from the devices using the methods as discussed herein, the difference in vehicle movement characteristics (e.g., owning to suspension types) and time differences in hitting vibration features (such as the bump shown in Fig. 4A) can be detected to determine which passengers are sharing a vehicle.

Fig. 4B shows example vibration data and timing control information for the situation shown in Fig. 4A.

In this example, a similar vibration pattern is detected for all three users when the vehicles hit the bump shown in Fig. 4A. However, as shown in the vibration plot, the vibration pattern is experienced simultaneously or nearly simultaneously for users A and B whereas the same pattern is seen later for user C. Thus, by measuring the time difference between when the vibration pattern is observed by the respective devices, the system is able to detect whether the users are in a same vehicle or not.

In addition, timing control is introduced as discussed above. Collecting acceleration data for an entire journey can be resource intensive (e.g., battery and network intensive). Therefore, as shown in the bottom of Fig. 4A, the time during which the motion sensor (e.g., the accelerometer) is activated in each user device is controlled so that the vibration data is collected only during the period of time in which the vehicles experience a vibration feature point such as the bump shown in Fig. 4A.

These vibration feature points are predicted using a vibration feature map as mentioned above. An example vibration feature map is shown in Fig. 5. The vibration feature map is a graph comprising geographical nodes and directional edges. Each node corresponds to a location, a travel mode (e.g., a vehicle type), and, optionally, a stored vibration pattern. The directional edges connect the nodes so that user devices can be tracked moving between the nodes based on the detected GPS location data. Using the current GPS location and, optionally, the detected travel mode of each device, a predicted time when the devices are expected to arrive at a location, with an associated stored vibration pattern in the vibration feature map, can be calculated. Nodes in the feature map having associated stored vibration patterns are referred to herein as vibration feature points. Thus, the predicted time is used to generate an activation time for broadcast to the user devices so that the activate their sensors and record vibration data during the vibration feature points. Where a node does not have a stored vibration pattern, it may merely indicate that the devices expected to arrive there at a similar time should activate their sensors so that proximate devices capture data which temporally overlaps.

In some examples, the vibration feature map may comprise copies of the observed vibration patterns determined from historical vibration data. The method may therefore include comparing vibration data from the user devices to the stored vibration patterns to verify the current location of each user device.

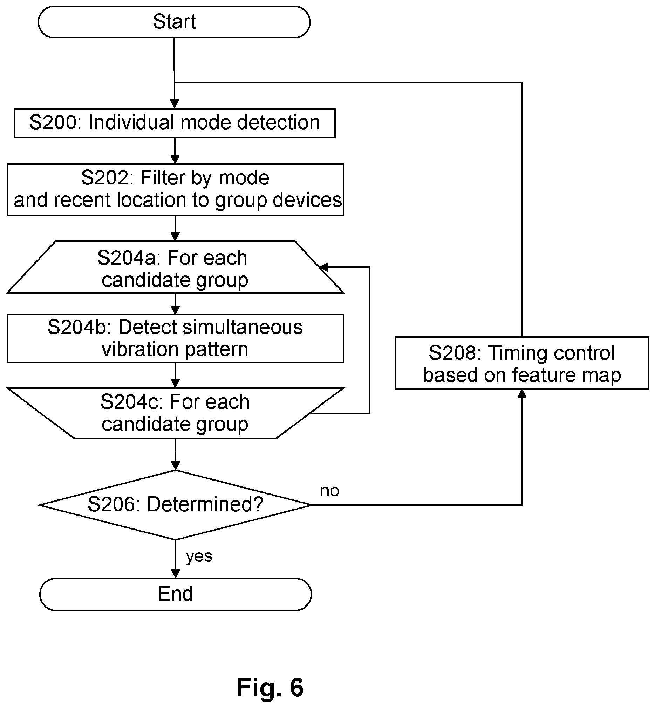

Fig. 6 shows a flow-diagram of a method for determining if passengers are travelling in a shared vehicle using the detected travel mode.

First, at step S200 the travel mode is detected individually for each user device (e.g., by using the motion data which was recorded using the device accelerometer or another method discussed above). Next, in step S202 Bluetooth proximity data, location data, and the detected travel mode are used to divide all available user devices into groups of devices which have a travel mode in common and that are within a physical proximity to each other. The user devices in each group are therefore candidate ride-sharing devices which may be travelling in a shared vehicle.

Next, in steps S204a to S204c, for each candidate group, the motion data from each user device is compared to identify vibration patterns. Where the same vibration pattern is identified in motion data from multiple devices in a candidate group, a time difference between the identified vibration patterns is calculated to identify which devices experienced the vibration pattern at or near to the same time. To do this, the time difference is compared to a threshold time difference, wherein the threshold time difference is dependent on the detected travel mode as discussed above. Additionally, a similarity score is calculated indicating how similar the vibration patterns recorded the different devices are.

In step S206, the devices are determined as being in a same vehicle or not based on the similarity score and the time difference. For example, where the similarity score is high (e.g., above a predetermined confidence threshold) and where the time difference is low (e.g., below the time difference threshold) the devices are determined to be travelling in the same vehicle. However, if the vibration patterns are not similar enough or if the time difference is too large, then the devices are determined to be in different vehicles.

Additionally, a confidence value is determined for each detection result. In this example, if the confidence value exceeds a threshold, then the process ends. However, if the confidence value is below a threshold, then the process moves to step S208 where timing control information is generated and broadcast to the user devices in order to re-activate the sensors to record another vibration pattern and perform the process again until a confidence score exceeding the threshold is obtained. The confidence value may be defined as an absolute difference between the similarity score and a threshold. For example, a range of similarity scores may be 0.0 - 1.0 with a threshold of 0.8. In a first case, where the similarity score is 0.95, the difference would be 0.15. In a second case, the similarity score may be 0.4 and so the difference is 0.4. These examples both correspond to high confidence values, one positive and one negative. In another case, where the similarity score is 0.75, the difference is 0.05. Here then the confidence value is low, and so the timing control may need to be changes to obtain more data to achieve a higher confidence value.

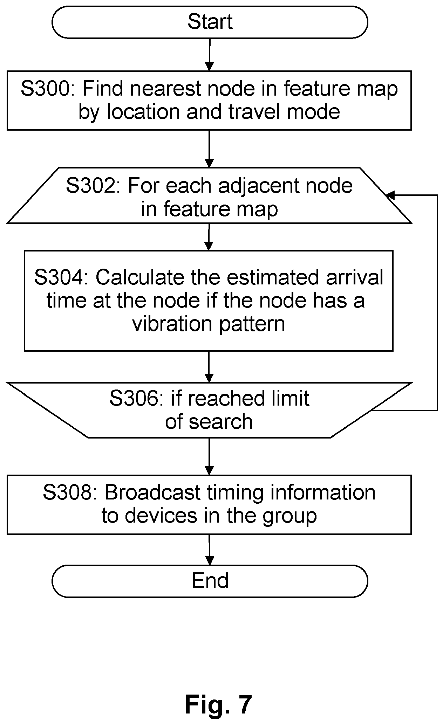

Fig. 7 shows a flow-diagram of a method of using the vibration feature map to determine timing information for activating the device sensors. First, in step S300 the current location of the user devices is determined from the location data and the nearest node in the vibration feature map to the current location is determined. In some examples, the determined travel mode (e.g., bus, train, or car) is used to determine the nearest nodes corresponding to that travel mode. For example, a vibration feature point in the vibration feature map may be registered for a train but not for a car.

Next, in steps S302-S304, for each of the nearest nodes which are associated with a corresponding vibration pattern, an arrival time of the devices at that node is calculated. The arrival times are used to generate the timing information for activating the motion sensors of the user devices. For example, if the devices, which are determined to be travelling in a bus, are predicted to reach a bump in a bus lane in 30 seconds, then the timing information is configured to activate the motion sensors in 20 seconds, for a 30 second time period, in order to record the motion of the user devices as the bus moves over the bump.

Steps S302-S304 are repeated for each of the candidate nodes of the vibration feature map which correspond to the nearest vibration feature points until step S306 when timing information is generated for each of the candidate nodes. In step S306, it is determined if the limit of the search has been reached. This limit of search represents how far nodes should be searched from the current node. This is chosen based on a number of factors. If the limit is a large number, nodes far from the current node are searched and longer timing information can be prepared. However this incurs additional computation cost, and may be less relevant if too far nodes are searched as there may be errors in the resulting timing information.

Finally, in step S308, the calculated timing information is transmitted to each of the devices in the candidate group (the candidate group being devices which are determined to be near each other) so that the motion sensors of those devices are activated at the same time or so as to at least partially overlap.

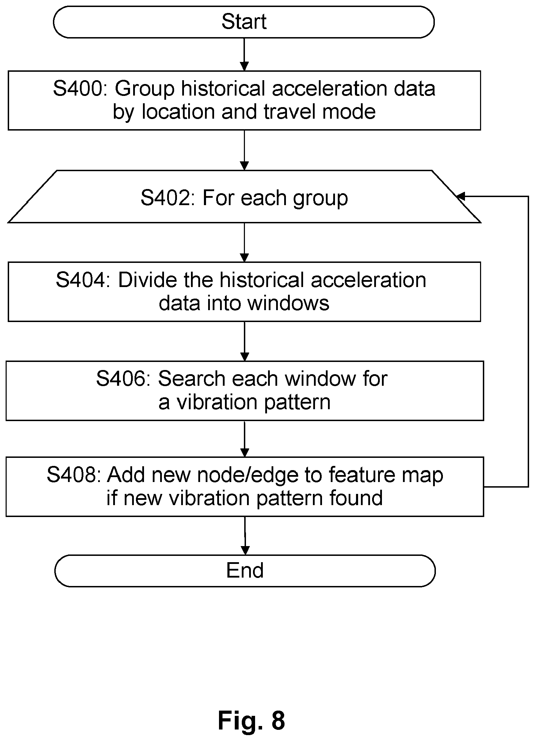

Fig. 8 shows a flow-diagram of a method for generating a vibration feature map. The vibration feature map may be generated manually, for example, using known data about a geographical area. However, the feature map may also be generated and/or updated automatically using recorded location and vibration data from the user devices.

First, in step S400, historical vibration data from a plurality of devices is grouped by the location and travel mode of the devices at the time that it was recorded. Next, in steps S402-S408, the vibration data in each group is divided into windows (e.g., 60 seconds long) and the windows are analysed to identify if they include similar vibration patterns. If a vibration pattern is identified in several examples of vibration data for that group, then in step S408, a new node is added to the feature map for the location and travel mode associated with that group. A vibration pattern may be identified by application of a clustering technique. For example, in a first step the vibration history can be sampled by a specific window (e.g., 1 second), and some features such as a spectrum pattern may be calculated for each sample. Next, samples can be clustered by some clustering technique (e.g., k-means) using the features. The result may mainly include large and indistinguishable clusters, reflecting the vibration pattern from flat parts of a road, but would occasionally include small but distinctive clusters reflecting a characteristic part of the road like a bump (see Figures 4A and 4B). If the samples in a cluster come from the same place, these can be regarded as a notable vibration pattern and so added to the feature map.

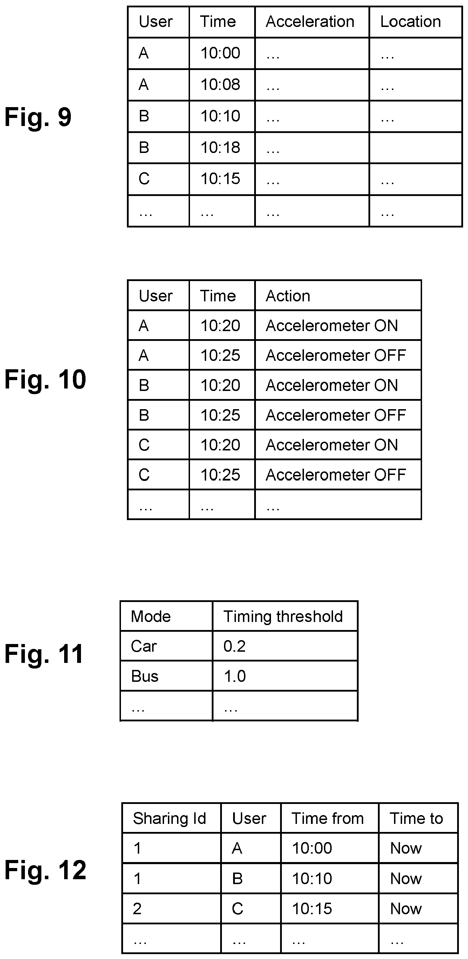

Fig. 9 is a table showing an example of input data from user's smartphone to the ride-sharing detection server. The input data consists of user ID, times at which the sensor data (e.g., the motion, proximity, and location data) was observed, and the sensor data itself (e.g. motion, location, and proximity data).

Fig. 10 is a table showing an example of timing control data for activating the device sensors. The timing control data, which is broadcasted by the server to the user devices, consists of a target user ID, times, and actions specifying when to activate or deactivate each of the device sensors such as the accelerometer, GPS receiver, and Bluetooth module.

Fig. 11 is a table showing example timing threshold data for determining if two devices are in a same vehicle. The timing threshold data consists of a travel mode and a timing threshold value to be applied for that travel mode.

Finally, Fig. 12 is a table showing example output data from the ride-sharing detection server. The output data consists of assigned sharing ids, user ids, a time from, and a time to. The same sharing id is assigned to user devices which are determined to be ride-sharing in a same vehicle. The "time from" and "time to" values are times at which the ride-sharing was determined to have started and ended, respectively. ***

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of detecting ride-sharing of two or more passengers travelling in a shared vehicle, the method comprising:
receiving data indicating that a first device associated with a first of the passengers and a second device associated with a second of the passengers are in physical proximity to each other,
receiving first motion data from the first device,
receiving second motion data from the second device, and
comparing the first motion data and the second motion data to verify if the first and second devices are travelling in a same vehicle.

2. The computer-implemented method of claim 1 wherein the received data comprises an indication that the first device has detected a signal from the second device.

3. The computer-implemented method of claims 1 or 2 wherein:
the received data comprises a location estimate of the first device and a location estimate of the second device, and
determining that the first and second devices are in physical proximity to each other comprises comparing the location estimates to determine the relative distance between the first and second devices.

4. The computer-implemented method of any preceding claim wherein the first and second motion data includes acceleration measurements recorded by IMU sensors in the first and second devices.

5. The computer-implemented method of any preceding claim wherein comparing the first motion data and the second motion data comprises:
identifying vibration patterns in the first and second motion data, and
comparing the vibrations patterns to determine if the devices are sharing a same travel route and/or a same vehicle type.

6. The computer-implemented method of any preceding claim wherein comparing the first motion data and the second motion data comprises:
identifying a vibration pattern in the first accelerometer data,
identifying the same or a corresponding vibration pattern in the second accelerometer data,
calculating a time difference between the vibration patterns identified in the first and second motion data, and
when the time difference is less than a time difference threshold, determining that the first and second devices are travelling in the same vehicle.

7. The computer-implemented method of claim 6 wherein the method further comprises using motion data from the first and second devices to determine a vehicle type in which the first and second devices are travelling, wherein the time difference threshold is dependent on the determined vehicle type.

8. The computer-implemented method of any preceding claim wherein the method further comprises generating timing information and providing the timing information to the first and second devices, the timing information being configured to instruct the first and second devices to begin recording the first and second motion data for a predetermined time period using one or more respective sensors.

9. The computer-implemented method of claim 8 wherein generating the timing information comprises:
determining a physical location estimate of the first and/or second devices from the received data,
comparing the physical location estimate to a vibration feature map to determine if the physical location estimate corresponds to one of a plurality of vibration feature points identified in the vibration feature map, and,
if the physical location corresponds to one of the plurality of vibration feature points, generating the timing information;
wherein each of the plurality of vibration feature points indicates a location associated with a previously detected vibration pattern.

10. The computer-implemented method of any preceding claim comprising:
receiving data indicating that one or more additional devices are in physical proximity to the first and/or second device,
receiving additional motion data from the one or more additional devices, and
comparing the additional motion data to the first and/or second motion data to determine if the one or more additional devices are travelling in the same vehicle as the first and/or second devices.

11. The computer-implemented method of any preceding claim wherein, when the first and second devices are determined to be in the same vehicle, the computer-implemented method comprises:
generating a positive ride-sharing indication signal, and
providing the positive ride-sharing indication signal to an access control system.

12. A computer-implemented method of verifying ride-sharing by two or more passengers in a shared vehicle, the method comprising:
recording, by a first device associated with one of the passengers, data indicating that the first device and a second device associated with a second of the passengers are in physical proximity to each other,
recording, by the first device, motion of the first device using a sensor to generate first motion data, and
providing the data indicating that the first and second devices are in physical proximity to each other and the motion data to a ride-sharing detection system, the ride-sharing detection system being configured to determine if the first and second devices are travelling together in a same vehicle according to the method of any preceding claim.

13. The computer-implemented method of claim 12 further comprising:
detecting, by the first device, a signal from the second device, wherein the data indicating that the first and second devices are in physical proximity to each other comprises an indication that the second device has been detected,
receiving, by the first device, second motion data from the second device, and
providing the second motion data to the ride-sharing detection system.

14. A ride-sharing detection system for detecting ride-sharing by two or more passengers travelling in a shared vehicle; the system comprising:
a data collection module configured to receive: data indicating that a first device associated with a first of the passengers and a second device associated with a second of the passengers are in physical proximity to each other, first motion data from the first device, and second motion data from the second device;
a proximity detection module configured to determine, from the received data if the first and second devices are travelling together; and
a ride sharing verification module configured to compare the first motion data and the second motion data to determine if the first and second devices are travelling together in a same vehicle.

15. A computer program product comprising instructions which when, executed by a computer, causes the computer to perform the computer-implemented method according to any one of claims 1 to 13.

## Amended claims

### Amended claims in accordance with Rule 137(2) EPC.

1. A computer-implemented method of detecting ride-sharing of two or more passengers travelling in a shared vehicle, the method comprising:
receiving data indicating that a first device associated with a first of the passengers and a second device associated with a second of the passengers are in physical proximity to each other,
receiving first motion data from the first device,
receiving second motion data from the second device, and
comparing the first motion data and the second motion data to verify if the first and second devices are travelling in a same vehicle; wherein comparing the first motion data and the second motion data comprises:
identifying a vibration pattern in the first accelerometer data,
identifying the same or a corresponding vibration pattern in the second accelerometer data,
calculating a time difference between the vibration patterns identified in the first and second motion data, and
when the time difference is less than a time difference threshold, determining that the first and second devices are travelling in the same vehicle;
wherein the time difference threshold is determined according to a vehicle type in which the first and second devices are travelling.

2. The computer-implemented method of claim 1 wherein the received data comprises an indication that the first device has detected a signal from the second device.

3. The computer-implemented method of claims 1 or 2 wherein:
the received data comprises a location estimate of the first device and a location estimate of the second device, and
determining that the first and second devices are in physical proximity to each other comprises comparing the location estimates to determine the relative distance between the first and second devices.

4. The computer-implemented method of any preceding claim wherein the first and second motion data includes acceleration measurements recorded by IMU sensors in the first and second devices.

5. The computer-implemented method of any preceding claim wherein comparing the first motion data and the second motion data comprises:
identifying vibration patterns in the first and second motion data, and
comparing the vibrations patterns to determine if the devices are sharing a same travel route and/or a same vehicle type.

6. The computer-implemented method of claim 1 wherein the method further comprises using motion data from the first and second devices to determine the vehicle type in which the first and second devices are travelling, wherein the time difference threshold is dependent on the determined vehicle type.

7. The computer-implemented method of any preceding claim wherein the method further comprises generating timing information and providing the timing information to the first and second devices, the timing information being configured to instruct the first and second devices to begin recording the first and second motion data for a predetermined time period using one or more respective sensors.

8. The computer-implemented method of claim 7 wherein generating the timing information comprises:
determining a physical location estimate of the first and/or second devices from the received data,
comparing the physical location estimate to a vibration feature map to determine if the physical location estimate corresponds to one of a plurality of vibration feature points identified in the vibration feature map, and,
if the physical location corresponds to one of the plurality of vibration feature points, generating the timing information;
wherein each of the plurality of vibration feature points indicates a location associated with a previously detected vibration pattern.

9. The computer-implemented method of claim 8 wherein the method further comprises updating the vibration feature map using the physical location estimate and the first and second motion data to update the vibration feature map to include newly detected vibration feature points.

10. The computer-implemented method of any preceding claim comprising:
receiving data indicating that one or more additional devices are in physical proximity to the first and/or second device,
receiving additional motion data from the one or more additional devices, and
comparing the additional motion data to the first and/or second motion data to determine if the one or more additional devices are travelling in the same vehicle as the first and/or second devices.

11. The computer-implemented method of any preceding claim wherein, when the first and second devices are determined to be in the same vehicle, the computer-implemented method comprises:
generating a positive ride-sharing indication signal, and
providing the positive ride-sharing indication signal to an access control system.

12. A computer-implemented method of verifying ride-sharing by two or more passengers in a shared vehicle, the method comprising:
recording, by a first device associated with one of the passengers, data indicating that the first device and a second device associated with a second of the passengers are in physical proximity to each other,
recording, by the first device, motion of the first device using a sensor to generate first motion data, and
providing the data indicating that the first and second devices are in physical proximity to each other and the motion data to a ride-sharing detection system, the ride-sharing detection system being configured to determine if the first and second devices are travelling together in a same vehicle according to the method of any preceding claim.

13. The computer-implemented method of claim 12 further comprising:
detecting, by the first device, a signal from the second device, wherein the data indicating that the first and second devices are in physical proximity to each other comprises an indication that the second device has been detected,
receiving, by the first device, second motion data from the second device, and
providing the second motion data to the ride-sharing detection system.

14. A ride-sharing detection system for detecting ride-sharing by two or more passengers travelling in a shared vehicle; the system comprising:
a data collection module (102) configured to receive: data indicating that a first device (200a) associated with a first of the passengers and a second device (200b) associated with a second of the passengers are in physical proximity to each other, first motion data from the first device (200a), and second motion data from the second device (200b);
a proximity detection module (104) configured to determine, from the received data if the first (200a) and second (200b) devices are travelling together; and
a ride sharing verification module (106) configured to compare the first motion data and the second motion data to determine if the first (200a) and second (200b) devices are travelling in a same vehicle, wherein comparing the first motion data and the second motion data comprises:
identifying a vibration pattern in the first accelerometer data,
identifying the same or a corresponding vibration pattern in the second accelerometer data,
calculating a time difference between the vibration patterns identified in the first and second motion data, and
when the time difference is less than a time difference threshold, determining that the first and second devices are travelling in the same vehicle;
wherein the time difference threshold is determined according to a vehicle type in which the first and second devices are travelling.

15. A computer program product comprising instructions which when, executed by a computer, causes the computer to perform the computer-implemented method according to any one of claims 1 to 13.
